# FASCICULE DE BREVET EUROPEEN

(11) **EP 1 858 633 B1**
(45) Date de publication et mention de la délivrance du brevet: **01.07.2009**
(21) Numéro de dépôt: 06726000.0
(22) Date de dépôt: 01.03.2006
(51) Int. Cl.: B01F 15/00, A47J 43/046, A47J 43/07

(54) **APPAREIL ELECTROMENAGER DE PREPARATION CULINAIRE DE TYPE BLENDER COMPRENANT UN BATON MELANGEUR**
MIXERÄHNLICHES ELEKTRISCHES KOCHGERÄT MIT RÜHRER
BLENDER-TYPE ELECTRICAL COOKING APPLIANCE COMPRISING A STIRRER

(30) Priorité: 03.03.2005 FR 0502156
(43) Date de publication de la demande: 28.11.2007
(73) Titulaire: SEB S.A., 69130 Ecully (FR)
(72) Inventeur: ROULAND, Alain, F-53700 Villaines La Juhel (FR)
(74) Mandataire: Kiehl, Hubert
(86) Numéro de dépôt international: PCT/FR2006/000459
(87) Numéro de publication internationale: WO 2006/092500

(56) Documents cités:
- GB-A- 1 258 441
- US-A- 3 346 029
- US-A- 5 302 021

## Description

La présente invention se rapporte à un appareil électroménager de préparation culinaire de type blender comportant un récipient fermé par un couvercle, le couvercle comprenant une ouverture permettant l'introduction d'un accessoire de type bâton mélangeur et se rapporte plus particulièrement à la forme particulière du bâton mélangeur.

Il est connu, du document US 5 302 021, un appareil blender comportant un couvercle de fermeture muni d'une ouverture pour l'introduction d'un accessoire de type bâton mélangeur, le bâton mélangeur permettant de ramener les aliments en direction de l'outil de coupe. Un tel bâton mélangeur comporte une extrémité plane et une section importante adaptée pour combattre la formation d'une poche d'air tourbillonnante au-dessus de l'outil de coupe, notamment lors du mixage d'aliments liquides.

Cependant, la demanderesse c'est rendu compte que lors du mixage d'aliments peu liquides, par exemple lors de la préparation d'une purée de pois chiche, l'extrémité plate du bâton mélangeur ne permettait pas de rabattre efficacement les aliments vers l'outil de coupe. De plus, un tel bâton mélangeur de section importante présente l'inconvénient d'occuper un volume important dans le récipient, ce qui réduit d'autant le volume disponible pour les aliments.

Aussi, un but de la présente invention est de remédier à ces inconvénients en proposant un appareil électroménager de type blender muni d'un accessoire de type bâton mélangeur améliorant notablement l'efficacité du mixage, notamment lorsque la préparation à mixer est peu liquide.

A cet effet, l'invention a pour objet un appareil électroménager de préparation culinaire de type blender comportant un récipient dont le fond comprend un outil de travail entraîné en rotation par un moteur, le récipient étant fermé par un couvercle comportant une ouverture permettant l'introduction d'un bâton mélangeur de sorte que l'extrémité inférieure du bâton mélangeur puisse venir à proximité de l'outil de travail, **caractérisé en ce que** le bâton mélangeur comprend une extrémité inférieure concave.

Une telle caractéristique présente l'avantage de faciliter la déviation du flux de mixage en direction de l'outil de coupe.

Selon une autre caractéristique de l'appareil selon l'invention, le bâton mélangeur comporte une tige supportant un déflecteur concave à son extrémité inférieure, le diamètre du déflecteur concave étant supérieur au diamètre de la tige.

Une telle caractéristique présente l'avantage de permettre l'obtention d'une surface importante de déflexion à l'extrémité inférieure du bâton mélangeur tout en conservant un volume réduit occupé par ce dernier.

Selon une autre caractéristique de l'appareil selon l'invention, le déflecteur concave s'étend radialement sur un diamètre de l'ordre de 3 à 5 cm.

Selon encore une autre caractéristique du couvercle selon l'invention, la tige présente une section transversale en forme de U.

Une telle caractéristique présente l'avantage de garantir une bonne rigidité au bâton mélangeur tout en ayant un volume occupé par la tige très faible.

Selon encore une autre caractéristique de l'invention, la profondeur de la concavité définie par l'extrémité concave du bâton mélangeur est comprise entre 3 et 7 mm.

Selon encore une autre caractéristique de l'invention, le bâton mélangeur comporte une extrémité supérieure muni d'une poignée, la base de la poignée comportant une garde dont les bords viennent reposer en bordure de l'ouverture du couvercle, la garde assurant le maintien du bâton mélangeur à une hauteur telle que son extrémité inférieure concave est à une distance inférieure à 2 cm du sommet de l'outil rotatif.

Une telle caractéristique permet d'approcher le déflecteur de l'outil sans risque de heurter ce dernier, l'efficacité du déflecteur étant d'autant plus importante qu'il se trouve proche de l'outil.

L'invention concerne également un bâton mélangeur destiné à être introduit dans un récipient de travail d'un appareil électroménager de préparation culinaire de type blender, **caractérisé en ce qu**'il comporte une extrémité concave. Selon encore une autre caractéristique de l'invention, le bâton mélangeur comporte une tige dont l'extrémité inférieure supporte un déflecteur concave, le diamètre du déflecteur étant supérieur au diamètre de la tige.

Selon encore une autre caractéristique de l'invention, le déflecteur concave s'étend radialement sur un diamètre de l'ordre de 3 à 5 cm.

Selon encore une autre caractéristique de l'invention, la tige du bâton mélangeur présente une section transversale en U.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue générale en perspective d'un appareil blender comportant un récipient comprenant un couvercle muni d'un bâton mélangeur selon un mode particulier de réalisation de l'invention ;
- la figure 2 est une vue en perspective du bâton mélangeur de la figure 1 représenté seul ;
- la figure 3 est une vue de côté du bâton mélangeur de la figure 2 ;
- la figure 4 est une vue en coupe longitudinale, suivant la ligne IV-IV, du bâton mélangeur de la figure 3 ;
- la figure 5 est une vue en coupe transversale, suivant la ligne V-V, du bâton mélangeur de la figure 3.

Seuls les éléments nécessaires à la compréhension de l'invention ont été représentés. Pour faciliter la lecture des dessins les mêmes éléments portent les mêmes références d'une figure à l'autre.

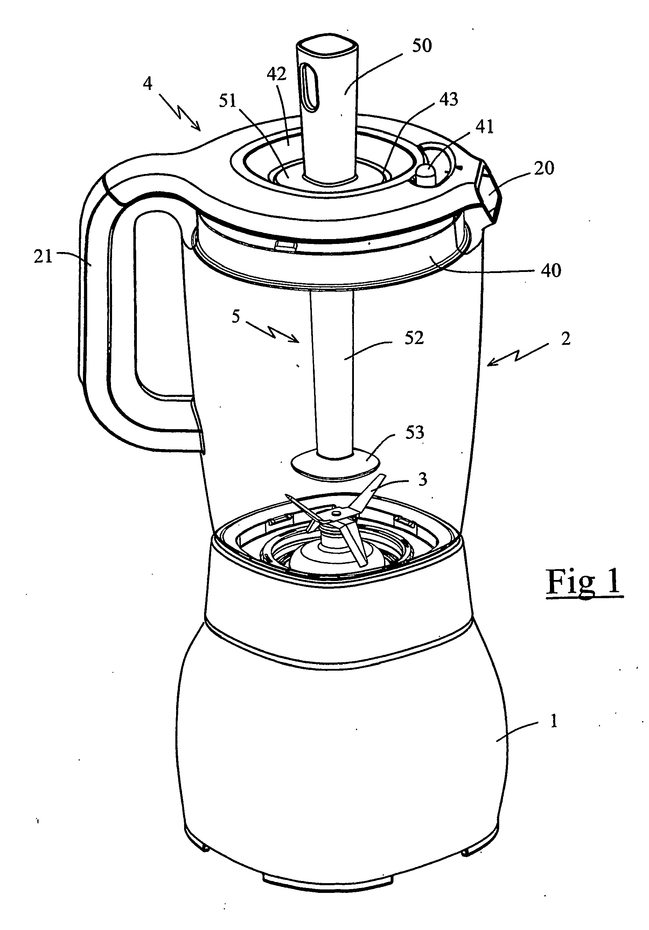

La figure 1 représente un appareil électroménager de préparation culinaire de type blender comportant un boîtier 1 servant de socle à un récipient 2 apte à contenir des aliments liquide ou solide, le boîtier 1 comportant classiquement un moteur, non représenté sur les figures, entraînant un outil de coupe rotatif 3 dans le fond du récipient 2.

Le récipient 2 est fermé par un couvercle 4 amovible et comporte un bord supérieur muni d'un bec verseur 20, le récipient 2 comportant une poignée 21 à l'opposé du bec verseur 20.

Le couvercle 4 comporte classiquement un corps sensiblement cylindrique reposant sur le bord supérieur du récipient 2 et présentant une jupe 40 venant s'insérer dans la partie supérieure du récipient 2.

La jupe 40 comporte un orifice de sortie, non visible sur la figure, venant se positionner en regard du bec verseur 20, et comporte un élément mobile, pouvant être déplacé en rotation au moyen d'une tirette 41 pour filtrer ou fermer cet orifice de sortie.

Le corps du couvercle 4 est muni, à l'opposé de cet orifice de sortie, d'une partie venant prolonger la forme de la poignée 21, cette partie comportant par exemple un ergot, non visible sur les figures, venant s'insérer dans la poignée 21 pour assurer le bon positionnement angulaire du couvercle sur le récipient 2.

Plus particulièrement selon l'invention, la partie supérieure du couvercle 3 comporte une cavité 42 comprenant une ouverture centrale 43 recevant un bâton mélangeur 5, l'ouverture 43 présentant avantageusement la forme d'un carré aux angles arrondis. A titre d'exemple, l'ouverture présente une largeur de l'ordre de 43 mm perpendiculairement aux côtés du carré et une largeur de l'ordre de 47 mm dans la diagonale du carré.

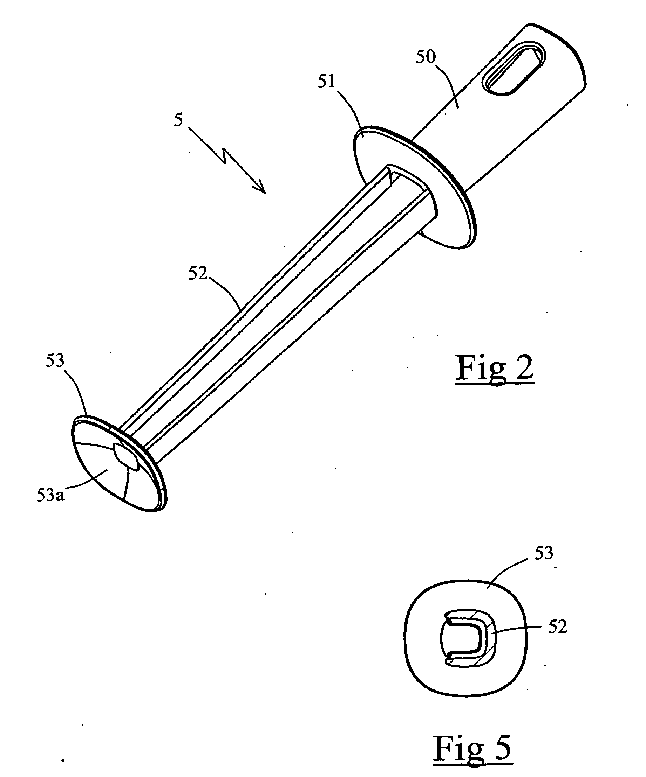

Comme on peut mieux le voir sur les figures 2 à 4, la partie supérieure du bâton mélangeur 5 comporte une poignée 50 qui est délimitée à son extrémité inférieure par une garde 51 de forme complémentaire à celle de l'ouverture 43 mais s'étendant radialement sur une largeur légèrement plus importante de sorte que les bords de la garde 51 viennent en appui sur les bords de l'ouverture 43, en autorisant un mouvement de basculement du bâton mélangeur sur le couvercle 4, la forme large et plate de la garde tendant à ramener automatiquement le bâton mélangeur 5 en position verticale dans laquelle toute la périphérie de la garde 51 est en contact avec l'ouverture 43

Le bâton mélangeur 5 comporte, sous la garde 51, une tige 52 rectiligne dont l'extrémité inférieure est munie d'un déflecteur 53, la longueur de la tige 52 étant telle que le déflecteur 53 vient à proximité du sommet de l'outil de coupe 3 lorsque le couvercle 4 est en place sur le récipient 2 et que la garde 51 du bâton mélangeur 5 repose sur les bords de l'ouverture 43. De manière préférentielle, la distance entre le déflecteur 53 et le sommet de l'outil de coupe 3 dans cette position du bâton 5 est à 2 cm et par exemple de l'ordre de 1 cm.

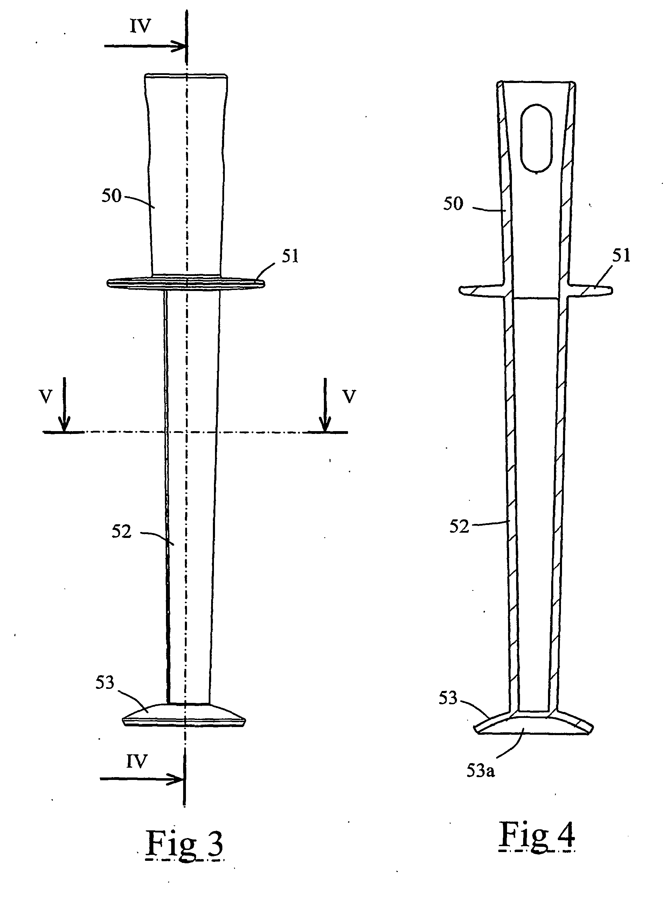

Conformément aux figures 4 et 5, le déflecteur s'étend radialement sur une largeur plus importante que la largeur de la tige 52 et présente une surface inférieure concave 53a définissant une cavité présentant une profondeur avantageusement comprise entre 3 et 7 mm et préférentiellement de l'ordre de 5 mm. Le déflecteur 53 présente avantageusement une forme extérieure comparable à celle de l'ouverture 43 mais dans des dimensions plus faible de manière à ce que le déflecteur 53 puisse pénétrer sans difficulté dans l'ouverture 43 du couvercle, le déflecteur 53 présentant par exemple une largeur de l'ordre de 40 mm.

La tige 52 présente quant à elle avantageusement une section transversale en forme de U, d'une largeur de l'ordre 15 mm, qui procure une grande rigidité à la tige 52 tout en minimisant le volume occupé par cette dernière lorsque le bâton mélangeur 5 est plongé dans le récipient 2. De plus, une telle forme en U permet une réalisation facile.

Un tel bâton mélangeur sera avantageusement réalisé en matériau plastique injectable, mais pourra également être réalisé en inox ou en bois.

Le bâton mélangeur ainsi réalisé permet, grâce à son déflecteur concave d'extrémité, de repousser plus efficacement les aliments vers l'outil de coupe, notamment pour les préparations faiblement liquides, telles que les purées de pois, ce qui permet de réduire notablement le temps nécessaire au mixage de tels aliments.

L'utilisateur pourra choisir de recentrer les aliments vers l'outil de coupe par un simple mouvement de basculement du bâton mélangeur autour de la garde en appui sur le couvercle, mais il pourra également avantageusement utiliser le bâton mélangeur dans un mouvement vertical, en venant pousser les aliments de haut en bas vers l'outil de coupe, le déflecteur présentant alors l'avantage de procurer une grande surface de poussée et la garde présentant l'avantage de servir de butée empêchant que le déflecteur ne vienne heurter l'outil de coupe.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention, le bâton mélangeur pourra comporter une tige de section transversale en T ou en croix, le corps de la tige pouvant être creux en étant par exemple obtenu par la technique d'injection gaz.

Dans une variante de réalisation, le bâton pourra comporter une tige de forme conique, le diamètre de la tige étant adaptée pour qu'il corresponde, à une hauteur donnée, au diamètre de l'ouverture dans le couvercle de sorte que la tige soit bloquée dans le couvercle à une hauteur telle que l'extrémité inférieure de la tige se trouve à proximité de l'outil rotatif. Une telle variante de réalisation permet de s'affranchir de l'utilisation d'une garde pour le blocage vertical du bâton mélangeur.

Ainsi, le déflecteur du bâton mélangeur pourra dans d'autres variantes de réalisation de l'invention comporter d'autres types de formes concaves telles qu'une forme hémisphérique ou tronconique, cette forme étant avantageusement adaptée à la forme de la section transversale du récipient.

## Revendications

1. Appareil électroménager de préparation culinaire de type blender comportant un récipient (2) dont le fond comprend un outil de travail (3) entraîné en rotation par un moteur, ledit récipient (2) étant fermé par un couvercle (4) comportant une ouverture (43) permettant l'introduction d'un bâton mélangeur (5) de sorte que l'extrémité inférieure du bâton mélangeur (5) puisse venir à proximité de l'outil de travail (3), **caractérisé en ce que** ledit bâton mélangeur (5) comprend une extrémité inférieure (53a) concave.

2. Appareil électroménager selon la revendication 1, **caractérisé en ce que** ledit bâton mélangeur (5) comporte une tige (52) supportant un déflecteur concave (53) à son extrémité inférieure, le diamètre du déflecteur concave (53) étant supérieur au diamètre de la tige (52).

3. Appareil électroménager selon la revendication 2, **caractérisé en ce que** le déflecteur concave (53) s'étend radialement sur un diamètre de l'ordre de 3 à 5 cm.

4. Appareil électroménager selon l'une quelconque des revendication 2 à 3, **caractérisé en ce que** la tige (52) présente une section transversale en forme de U.

5. Appareil électroménager selon l'une quelconque des revendications 1 à 4, **caractérisé en ce que** la profondeur de la concavité définie par l'extrémité concave (53a) du bâton mélangeur (5) est comprise entre 3 et 7 mm.

6. Appareil électroménager selon l'une quelconque des revendications 1 à 5, **caractérisé en ce que** le bâton mélangeur (5) comporte une extrémité supérieure muni d'une poignée (50), la base de la poignée (50) comportant une garde (51) dont les bords viennent reposer en bordure de l'ouverture (43) du couvercle, ladite garde (51) assurant le maintien du bâton mélangeur (5) à une hauteur telle que son extrémité inférieure concave (53a) est à une distance inférieure à 2 cm du sommet de l'outil rotatif (3).

7. Bâton mélangeur (5) destiné à être introduit dans un récipient de travail (2) d'un appareil électroménager de préparation culinaire de type blender, **caractérisé en ce qu'**il comporte une extrémité (53a) concave.

8. Bâton mélangeur selon la revendication 7, **caractérisé en ce qu'**il comporte une tige (52) dont l'extrémité inférieure supporte un déflecteur concave (53), le diamètre du déflecteur (53) étant supérieur au diamètre de la tige (52).

9. Bâton mélangeur selon l'une quelconque des revendications 7 à 8, **caractérisé en ce que** le déflecteur concave (53) s'étend radialement sur un diamètre de l'ordre de 3 à 5 cm.

10. Bâton mélangeur selon la revendication 8, **caractérisé en ce que** ladite tige (52) présente une section transversale en U.

## Claims

1. A household electrical appliance for preparing food, the appliance being of the blender type and including a receptacle (2) having a bottom provided with a work tool (3) driven in rotation by a motor, said receptacle (2) being closed by a lid (4) provided with an opening (43) making it possible to insert a mixer stick (5) so that the bottom end of the mixer stick (5) can come into the vicinity of the work tool (3), said household electrical appliance being **characterized in that** said mixer stick (5) has a concave bottom end (53a).

2. A household electrical appliance according to claim 1, **characterized in that** said mixer stick (5) comprises a rod (52) supporting a concave deflector (53) at its bottom end, the diameter of the concave deflector (53) being greater than the diameter of the rod (52).

3. A household electrical appliance according to claim 2, **characterized in that** the concave deflector (53) extends radially over a diameter of approximately in the range 3 centimeters (cm) to 5 cm.

4. A household electrical appliance according to claim 2 or claim 3, **characterized in that** the rod (52) presents a U-shaped cross-section.

5. A household electrical appliance according to any one of claims 1 to 4, **characterized in that** the depth of the concave recess defined by the concave end (53a) of the mixer stick (5) lies in the range 3 millimeters (mm) to 7 mm.

6. A household electrical appliance according to any one of claims 1 to 5, **characterized in that** the mixer stick (5) has a top end provided with a handle (50), the base of the handle (50) having a guard (51) whose edges come to rest on the edge of the opening (43) in the lid, said guard (51) holding the mixer stick (5) at a height such that its concave bottom end (53a) is at a distance of less than 2 cm from the top of the rotary tool (3).

7. A mixer stick (5) designed to be inserted into a work receptacle (2) of a household electrical appliance of the blender type for preparing food, said mixer stick being **characterized in that** it has a concave end (53a).

8. A mixer stick according to claim 7, **characterized in that** it comprises a rod (52) with a bottom end that supports a concave deflector (53), the diameter of the deflector (53) being greater than the diameter of the rod (52).

9. A mixer stick according to claim 7 or claim 8, **characterized in that** the concave deflector (53) extends radially over a diameter of approximately in the range 3 cm to 5 cm.

10. A mixer stick according to claim 8, **characterized in that** said rod (52) presents a U-shaped cross-section.

## Patentansprüche

1. Elektrohaushaltsgerät zur Nahrungszubereitung vom Typ Mixer, mit einem Behälter (2), dessen Boden ein Arbeitswerkzeug (3) aufweist, das durch einen Motor in Drehung angetrieben ist, wobei der Behälter (2) mit einem Deckel (4) verschlossen ist, der eine Öffnung (43) aufweist, die das Einführen eines Mixstabs (5) ermöglicht, so dass das untere Ende des Mixstabs (5) in die Nähe des Arbeitswerkzeugs (3) gelangen kann, **dadurch gekennzeichnet, dass** der Mixstab (5) ein unteres konkaves Ende (53a) aufweist.

2. Elektrohaushaltsgerät nach Anspruch 1, **dadurch gekennzeichnet, dass** der Mixstab (5) einen Schaft (52) aufweist, der an seinem unteren Ende eine konkave Ablenkscheibe (53) trägt, wobei der Durchmesser der konkaven Ablenkscheibe (53) größer ist als der Durchmesser des Schafts (52).

3. Elektrohaushaltsgerät nach Anspruch 2, **dadurch gekennzeichnet, dass** sich die konkave Ablenkscheibe (53) auf einen Durchmesser in der Größenordnung von 3 bis 5 cm radial erstreckt.

4. Elektrohaushaltsgerät nach einem der Ansprüche 2 bis 3, **dadurch gekennzeichnet, dass** der Schaft (52) einen U-förmigen Querschnitt aufweist.

5. Elektrohaushaltsgerät nach einem der Ansprüche 1 bis 4, **dadurch gekennzeichnet, dass** die Tiefe der durch das konkave Ende (53a) des Mixstabs (5) definierten Konkavität zwischen 3 und 7 mm beträgt.

6. Elektrohaushaltsgerät nach einem der Ansprüche 1 bis 5, **dadurch gekennzeichnet, dass** der Mixstab (5) ein oberes Ende aufweist, das mit einem Griff (50) versehen ist, wobei die Basis des Griffs (50) einen Abstandshalter (51) aufweist, dessen Ränder am Rand der Öffnung (43) des Deckels zum Aufliegen kommen, wobei der Abstandshalter (51) das Halten des Stabmixers (5) in einer solchen Höhe gewährleistet, dass sein konkaves unteres Ende (53a) sich in einem Abstand von weniger als 2 cm bezüglich des Oberteils des Drehwerkzeugs (3) befindet.

7. Mixstab (5), der dazu bestimmt ist, in einen Arbeitsbehälter (2) eines Elektrohaushaltsgerät zur Nahrungszubereitung vom Typ Mixer eingeführt zu werden, **dadurch gekennzeichnet, dass** er ein konkaves Ende (53a) aufweist.

8. Mixstab nach Anspruch 7, **dadurch gekennzeichnet, dass** er einen Schaft (52) aufweist, dessen unteres Ende eine konkave Ablenkscheibe (53) aufweist, wobei der Durchmesser der Ablenkscheibe (53) größer ist als der Durchmesser des Schafts (52).

9. Mixstab nach einem der Ansprüche 7 bis 8, **dadurch gekennzeichnet, dass** sich die konkave Ablenkscheibe (53) auf einen Durchmesser in der Größenordnung von 3 bis 5 cm radial erstreckt.

10. Mixstab nach Anspruch 8, **dadurch gekennzeichnet, dass** der Schaft (52) einen U-förmigen Querschnitt aufweist.
